# EUROPÄISCHE PATENTSCHRIFT

(11) **EP 3 990 301 B1**
(45) Veröffentlichungstag und Bekanntmachung des Hinweises auf die Patenterteilung: **10.05.2023**
(21) Anmeldenummer: 21734819.2
(22) Anmeldetag: 21.06.2021
(51) Int. Cl.: B60K 37/02, B60K 37/06, G06F 3/0488, G06F 3/044, G06F 3/01

(54) **BEDIENEINHEIT MIT EINER BERÜHRUNGSSENSITIVEN BEDIENFLÄCHE**
OPERATING UNIT COMPRISING A TOUCH-SENSITIVE OPERATING AREA
UNITÉ DE COMMANDE COMPORTANT UNE SURFACE DE COMMANDE TACTILE

(30) Priorität: 30.06.2020 DE 102020003923
(43) Veröffentlichungstag der Anmeldung: 04.05.2022
(73) Patentinhaber: Mercedes-Benz Group AG, 70372 Stuttgart (DE)
(72) Erfinder: STAHL, Volker, 75382 Althengstett (DE)
(74) Vertreter: JENSEN & SON
(86) Internationale Anmeldenummer: PCT/EP2021/066817
(87) Internationale Veröffentlichungsnummer: WO 2022/002665

(56) Entgegenhaltungen:
- EP-A2- 2 838 004
- US-A1- 2013 050 114
- US-A1- 2015 054 780

## Beschreibung

Die Erfindung betrifft eine Bedieneinheit mit einer berührungssensitiven Bedienfläche und mit einer Steuereinheit sowie ein Lenkrad mit einer solchen Bedieneinheit.

Berührungssensitive Bedienflächen sind aus dem Stand der Technik bekannt. So betrifft beispielsweise die US 2011 0148770 A1 ein Verfahren, bei dem eine Benutzereingabe an einer berührungssensitiven Oberfläche erfasst wird, ein komplexes Berührungsmuster zur Eingabe erkannt wird, und eine Aktion auf Basis des Berührungsmusters ausgeführt wird. Das Berührungsmuster ist dabei eines aus: Ein zeitliches Muster, ein vielförmiges, eine Multi-Touch Geste mit Fingern und anderem, eine Bewegung einer oder mehrerer Berührungen entlang eines Ortes auf einer Tastatur, eine Reihe von Berührungen mit variierender Intensität oder Abgreifwinkel. Die Aktion ist ferner eine der folgenden: Das Ausführen einer Systemaktion, das Hinzufügen von Merkmalen zu einem Text, das Filtern zum Entfernen von rastend ausgeführten Interaktionen.

Außerdem betrifft die US 2007 / 0 097 096 A1 eine bimodale Touchscreen-Interaktion, wobei die Fläche eines Fingers ermittelt wird, die die Oberfläche des Touchscreens berührt, und auf Basis von Größe, Form oder Orientierung bestimmt wird, ob die Interaktion durch den Finger eine Fingerspitzen- oder eine Fingerflächen-Interaktion ist, und wobei auf Basis dieser Bestimmung einer von zwei verschiedenen Moden ermittelt wird, wobei sich ein Modus auf eine Fingerflächen-Interaktion und der andere Modus auf die Fingerspitzen-Interaktion bezieht.

Die DE 10 2013 020 795 A1 betrifft ferner ein Verfahren zum Steuern von Funktionen eines Kraftfahrzeugs oder darin enthaltener Aggregate, bei dem die Bewegung oder Geste der Hand und/oder der Finger und/oder des Daumens mittels einer in der Umgebung des Lenkrades angeordneten Sensoreinheit erfasst wird und bei Korrelation der Bewegungen oder Geste mit vordefinierten Bewegungen oder Geste dies als eine Betätigung wenigstens eines virtuellen, real aber nicht vorhandenen Bedienelements gewertet wird. Das wenigstens eine virtuelle Bedienelement ist dabei am Lenkrad definiert, wobei mittels der auf das Lenkrad gerichteten Sensoreinheit und einer Auswerteeinheit die Bewegung oder Gesten in Verbindung mit dem Lenkrad ausgewertet werden, und zwar derart, dass die Sensoreinheit in wenigstens einem am Lenkrad vordefinierten Bereich Bewegung oder Geste der Hand und/oder der Finger und/oder des Daumens erfasst und an eine Auswerteeinheit weiterleitet, die Auswerteeinheit relativ zum Lenkrad ausgeführte erfasste Bewegung oder Geste mit wenigstens einem vordefinierten gespeicherten Muster vergleicht und die Auswerteeinheit bei vordefinierter Übereinstimmung mit dem wenigstens einen Muster einen vordefinierten Schaltschritt auslöst.
Ferner betrifft die US 2015/0054780 A1 eine Operationseingabevorrichtung, umfassend: Eine Koordinaten-Detektiereinheit, die dafür eingerichtet ist, ein Detektionssignal abzugeben, das eine Koordinate entsprechend einem Kontakt-Zustand angibt, in dem ein Finger mit der Koordinaten-Detektiereinheit in Kontakt ist, und ein Detektionssignal, das eine Koordinate entsprechend einem Nähe-Zustand angibt, in dem der Finger ohne Kontakt in Nähe der Koordinaten-Detektiereinheit ist;
Eine Bereichs-Detektiereinheit, die dafür eingerichtet ist, basierend auf den Detektionssignalen einen Kontakt-Bereich, in dem der Finger mit der Koordinaten-Detektiereinheit in Kontakt ist, und einen Nähe-Bereich zu detektieren, in dem der Finger ohne Kontakt in der Nähe der Koordinaten-Detektiereinheit ist; und
Eine eine gezeigte Koordinate bestimmende Einheit, die dafür eingerichtet ist, basierend auf dem detektierten Kontakt-Bereich und dem detektierten Nähe-Bereich eine gezeigte Koordinate zu bestimmen.

Die US 2013/0050114 A1 betrifft außerdem eine Vorrichtung zur Steuerung von Funktionen elektronischer Einrichtungen eines Fahrzeugs mit einer Lenkeinrichtung, die eine Vorder- und eine Rückseite aufweist, wobei die Vorderseite zu einem Insassen gerichtet ist, der auf einem Fahrersitz des Fahrzeugs sitzt, mit einer ersten Eingabeeinrichtung, die zur Erzeugung von Steuersignalen ausgebildet ist, mit einer ersten Anzeigeeinrichtung, die zur graphischen Wiedergabe umgesetzter Steuersignale in Anzeigen ausgebildet ist, wobei die erste Eingabeeinrichtung auf der Rückseite der Lenkeinrichtung und die erste Anzeigeeinrichtung auf der Vorderseite der Lenkeinrichtung angeordnet sind.

Die EP 2 838 004 A2 betrifft darüber hinaus eine Bedienvorrichtung, insbesondere in einem Fahrzeug, mit einem Bedienelement, bei dem eine berührungsempfindliche Oberfläche ausgebildet ist, und mit einer Steuervorrichtung, die mit dem Bedienelement gekoppelt ist, so dass Daten zu Berührungen der berührungsempfindlichen Oberfläche an die Steuervorrichtung übertragbar sind, wobei innerhalb der berührungsempfindlichen Oberfläche zumindest zwei getrennte Flächen ausgebildet sind, und wobei die Steuervorrichtung so ausgebildet ist, dass ein Parameter inkrementell verändert wird, wenn erfasst wurde, dass eine der zumindest zwei getrennten Flächen berührt wurde, und derselbe Parameter inkrementell verändert wird, wenn erfasst wurde, dass eine Streichgeste auf der berührungsempfindlichen Oberfläche ausgeführt wurde.

Ferner betrifft die DE 699 30 774 T2 ein kapazitives Touchpad, um ein elektrisches Ausgangssignal zur selektiven Steuerung der Bewegung einer visuellen Zeigeranzeige über einem zweidimensionalen Anzeigebildschirm bereitzustellen, mit: Einer Mehrzahl N an einzelnen Kapazitätsmesszellen, die in einem ersten zweidimensionalen Zeilen/Spalten-Array angeordnet sind, wobei das erste Array N Zeilen/Spalten-Schnittstellen aufweist und das erste Array einen im Allgemeinen planaren Bereich einnimmt, der ausgelegt ist, mit einer menschlichen Fingerauflagefläche zusammen zu wirken, um ein Ausgangssignal zum Steuern der Anzeigebewegung zu erzeugen, wobei jede einzelne Messzelle ein eindeutiges Ausgangssignal hat, das sich gemäß einem Lageverhältnis zu einer menschlichen Fingerspitze ändert, einer Mehrzahl N an einzelnen Widerstandsknoten, die in einem zweiten zweidimensionalen Zeilen/Spalten-Array angeordnet sind, wobei das zweite Array N Zeilen/Spalten-Schnittstellen in einer Anordnung aufweist, die den N Zeilen/Spalten-Schnittstellen des ersten Array entspricht, einer Schaltkreiseinrichtung, die jedes eindeutige Ausgangssignal der Messzellen an einen entsprechenden der Widerstandsknoten des zweiten Array anlegt, einer ersten Berechnungseinrichtung, die mit dem zweiten Array verbunden ist, um ein Schwerpunktssignal als Funktion der Position einer menschlichen Fingerauflagefläche auf dem planaren Bereich des ersten Array zu berechnen, und einer ersten Ausgabeeinrichtung, die mit der ersten Berechnungseinrichtung verbunden ist und ein Anzeigebewegungssteuersignal als Funktion des Schwerpunktssignals bereitstellt.

Wenn als Bezugspunkt ein solcher Flächenschwerpunkt der berührenden Fingerauflagefläche oder ein nach einem anderen Verfahren berechneter, weitgehend in der Mitte der Fingerauflagefläche liegender Bezugspunkt, genutzt wird, muss ein Nutzer seinen Finger bei einer Wischbewegung über die Bedienoberfläche soweit über ein vorgegebenes Feld schieben, bis der Bezugspunkt, d.h. der Schwerpunkt im Bereich des Feldes liegt, wodurch eine Auslösung der dem Feld zugeordneten Funktion verzögert wahrgenommen wird.

Aufgabe der Erfindung ist es, eine berührungssensitive Bedieneinheit insbesondere für die Anwendung in einem Fahrzeug zu verbessern.

Die Erfindung ergibt sich aus den Merkmalen der unabhängigen Ansprüche. Vorteilhafte Weiterbildungen und Ausgestaltungen sind Gegenstand der abhängigen Ansprüche.

Ein erster Aspekt der Erfindung betrifft eine Bedieneinheit mit einer berührungssensitiven Bedienfläche und mit einer Steuereinheit, wobei die Bedienfläche zum Erfassen von durch einen Finger eines Anwenders berührten Bereichen der Bedienfläche und zum Übermitteln von Informationen über die berührten Bereiche an die Steuereinheit ausgeführt ist, wobei die Steuereinheit dazu ausgeführt ist, aus den Informationen über die berührten Bereiche einen Aktivierungsort auf der Bedienfläche zu ermitteln, und, wenn der Aktivierungsort in einem vorgegebenen Feld der Bedienfläche liegt, eine dem Feld zugeordnete Funktion auszuführen,
dadurch gekennzeichnet, dass die Steuereinheit dazu ausgeführt ist, den Aktivierungsort auf oder im Bereich einer eine Fingerkuppe oder Fingerspitze zu begrenzenden, in Bewegungsrichtung des Fingers auf der Oberfläche der Bedienfläche vorne liegenden Randlinie des berührenden Fingers zu bestimmen.

Die berührungssensitive Bedienfläche ist Teil eines Touchpads oder Touchdisplays. Bei einem Touchdisplay kann die Steuereinheit an einer Unterseite eines Bildschirms angeordnet sein, sodass von außen der Bildschirm zusammen mit seiner Steuereinheit als einheitliche Vorrichtung wahrgenommen wird. Die berührungssensitive Bedienfläche weist insbesondere eine Matrix resistiver Sensorzellen auf, bevorzugt jedoch eine Matrix kapazitiver Sensorzellen. Bei einer sehr nahen Annäherung eines menschlichen Fingers an die kapazitiven Sensorzellen ändert sich die jeweilige Kapazität, sodass die Annäherung des Fingers erkannt wird. Jede dieser insbesondere kapazitiven Sensorzellen des Bildschirms liefert zumindest eine Information an die Steuereinheit, ob eine Berührung an der jeweiligen Sensorzelle detektiert wird, und insbesondere weiterhin bevorzugt auch welcher Signalwert an der jeweiligen Sensorzelle anliegt. Ein solcher Signalwert gibt insbesondere die Intensität der Berührung in Abhängigkeit einer Entfernung der Fingerbereiche an der jeweiligen Sensorzelle an.

Der Aktivierungsort ist ein Ort oder Bereich auf der Bedienfläche, der von einer Berührung durch einen Finger berührt wird. Der Aktivierungsort auf der Bedienfläche kann mit einer Funktion verknüpft sein, die von der Steuereinheit ausgeführt wird, beispielsweise ein Feld dargestellt durch Anzeige eines Symbols.

Die Anzeige des Symbols wird entweder durch Anzeige auf der Bedienoberfläche selbst mittels statischer bildlicher Markierungen, durch Anzeige von Icons auf einem berührungssensitiven Bildschirm oder bei einer als Touchpad ausgeführten Bedienfläche durch Anzeige auf einem zugeordneten Bildschirm umgesetzt.

Die Funktion wird ausgelöst, sobald der Aktivierungsort, d.h. der in Bewegungsrichtung des Fingers auf der Bedienfläche vorne liegenden Randlinie oder Randlinienbereich der Fingerkuppe eine vorgegebene Zeit in dem vorgegebenen Bereich des durch das Symbol visualisierten Feldes verbleibt. Die Zählung der vorgegebenen Zeit startet mit erstmaligem Erreichen des vorgegebenen Feldes mit der Randlinie oder dem Randlinienbereich der Fingerkuppe. Auch können über den Aktivierungsort, wenn er sich zeitlich ändert, Wischgesten erzeugt werden. Beispielsweise kann ein sich auf der Oberfläche der Bedienfläche ändernder Aktivierungsort einen Schieberegler bedienen.

Aus der Bewegungsrichtung des Fingers ermittelt die Steuereinheit, wo die Fingerkuppe, und insbesondere ihre Randlinie, des berührenden Fingers relativ zur Bedienfläche und insbesondere relativ zu allen berührten Bereichen auf der Bedienfläche zu verorten ist. Die zugrundeliegende Annahme ist, dass der Finger in der entsprechenden Anwendung nicht in rein senkrechter Richtung auf die Oberfläche Bedienfläche auftrifft, sondern eine Bewegungsrichtung entlang der Oberfläche Bedienfläche aufweist, d.h. eine Wischbewegung ausführt. Diese Tangentialkomponente der Bewegung des Fingers wird im Begriff der Bewegungsrichtung berücksichtigt. Aus dieser Bewegungsrichtung wird der Ort des distalen Endes des Fingers relativ zur Bedienfläche ermittelt. Damit sind bei einer berührenden Eingabe des Anwenders die Position bzw. der Bereich der Randlinie des berührenden Fingers relativ zur Bedienfläche bekannt.

Die Fingerkuppe umfasst dabei eine Fingerspitze und beschreibt insbesondere das distale Ende des Fingers des Anwenders am entgegengesetzten Ende der Fingerwurzel, welche am proximalen Ende des Fingers gelegen ist. Die Fingerkuppe betrifft außerdem insbesondere eine einem Fingernagel gegenüberliegende Seite des Fingers.

Indem der durch Fingerberührung ausgewählte Aktivierungsort nicht wie im Stand der Technik bezogen auf einen Schwerpunkt der Fläche aller berührten Bereiche auf der Bedienfläche ermittelt, sondern abhängig von der Position bzw. der bereichsmäßigen Position einer Randlinie der Fingerkuppe ermittelt wird, kann eine Funktion schneller ausgelöst werden. Zudem wird kein ungewünschtes Feld oder Symbol "zufällig" angewählt, lediglich, weil es vom Finger überdeckt wird. Erfindungsgemäß ist die Steuereinheit dazu ausgeführt, den Aktivierungsort nur dann auf die Position oder den Bereich der die Fingerkuppe begrenzenden Randlinie des Fingers zu beziehen, wenn eine ermittelte Bewegungsgeschwindigkeit eines Verlaufs der berührten Bereiche der Bedienfläche einen vorgegebenen Grenzwert überschreitet, und andernfalls den Aktivierungsort aus einem Flächenschwerpunkt aller zu einem Zeitpunkt vom Finger berührten Bereiche der Bedienfläche zu ermitteln.

Die Bewegungsgeschwindigkeit kann während des Aufbaus der Berührung durch den Anwender beispielsweise durch eine Kameraeinheit erfasst werden. Alternativ bevorzugt dazu kann analog zur vorherigen Ausführungsform die Bewegungsgeschwindigkeit aus einem zeitlichen Verlauf der an der Bedienfläche berührten Bereiche abgeleitet werden. Diese Ausführungsform berücksichtigt vorteilhaft die Annahme, dass nur dann der Anwender beabsichtigt ein durch ein Symbol visualisiertes Feld im Bereich seiner Fingerspitze anzuwählen, wenn er entschlossen genug ist, das heißt mit einer Mindestgeschwindigkeit, sich auf dieses den Aktivierungsbereich umfassende Feld mit seiner Fingerspitze hin zu bewegen. Bei entsprechend schneller, einer über der Mindestgeschwindigkeit liegenden Bewegungsgeschwindigkeit scrollt der Nutzer beispielsweise durch ein Menü, dabei ist für eine schnelle Systemreaktion von Vorteil ein oder mehrere Symbole bereits anzuwählen, sobald diese von einer in Bewegungsrichtung liegende Randlinie des Fingers berührt werden. Berührt der Nutzer dagegen sehr langsam seinen Finger über die Bedienfläche, dann ist im Rahmen der Bediensicherheit eine Symbolanwahl bei Berührung durch den Fingerflächenschwerpunkt vorteilhaft.

Es ist daher eine vorteilhafte Wirkung der Erfindung, dass nur zufällig überdeckte Bereiche auf der berührungssensitiven Bedienfläche nicht aktiviert werden, sondern grundsätzlich nur ein Feld dann aktiviert wird, wenn es mit der einer Fingerkuppe begrenzenden Randlinie des Anwenders berührt wird. Insbesondere in Anwendungen aus dem Automobilbereich, beispielsweise einer berührungssensitiven Bedienfläche am Lenkrad, wo der Finger des Anwenders über einen Rand der Bedienfläche in Richtung eines Feldes auf der Mitte der Bedienfläche fährt, wird daher nur das mit bei der Wischbewegung der Fingerspitze bzw. Fingerkuppe bewusst angewählte, durch ein entsprechendes Symbol visualisierte Feld aktiviert.

Gemäß einer vorteilhaften Ausführungsform ist die Steuereinheit dazu ausgeführt, den Aktivierungsort aus der Position eines höchsten Signalwertes oder aus einem Flächenschwerpunkt der auf der Randlinie oder im Bereich der Randlinie der von der Bedienfläche erfassten Signalwerte an den berührten Bereichen zu bestimmen. Insbesondere dann, wenn die berührungssensitive Bedienfläche eine matrixförmige Anordnung von Sensorzellen aufweist, von denen jede einzelne wiederum ausgeführt ist, einen jeweiligen Signalwert zu ermitteln, liegt nicht nur eine binäre Information über das Anliegen einer Berührung oder die Abwesenheit einer Berührung an jeder der Sensorzellen vor, sondern auch ein Maß für die Intensität der Berührung an der jeweiligen Sensorzelle. Die Intensität wird durch die Höhe der Signalwerte bestimmt, die wiederum vom Abstand der Fingerpartien zu der Bedienfläche abhängen. Beispielsweise ist der Abstand der Fingerpartien und die Form der Berührfläche davon abhängig, wie stark der Anwender auf die Bedienfläche drückt.

Dies führt vorteilhaft dazu, dass sanfte und mutmaßlich ungewollte Berührungen der Oberfläche der berührungssensitiven Bedienfläche von der Steuereinheit nicht als maßgebliche Berührung eingestuft werden. Werden nach dieser Ausführungsform im Bereich der Randlinie bzw. Fingerspitze des berührenden Fingers Signalwerte detektiert, so kann einerseits die Position des höchsten Signalwertes berührten Sensorzellen an dieser Randlinie oder im Bereich der Randlinie als Aktivierungsort bestimmt werden, wodurch bei signifikanten Unterschieden der Signalwerte eine zielsichere Anwahl des vorgegebenen Feldes gegeben ist. Die Bestimmung eines Flächenschwerpunkts der Sensorsignale der auf oder im Bereich einer eine Fingerkuppe begrenzenden, in Bewegungsrichtung vorne liegenden Randlinie vermeidet bei ähnlich hohen Signalwerten an oder im Bereich der Randlinie eine Übergewichtung eines geringfügig über den anderen liegenden Signalwerts. Ein solcher nach aus dem Stand der Technik bekannten Methoden ermittelter Flächenschwerpunkt kann als geometrische Interpretation des arithmetischen Mittels (genau genommen das normierte Integral) von Ortsvektoren der Sensorzellen verstanden werden.

Gemäß einer vorteilhaften Ausführungsform weist die Bedieneinheit eine Kameraeinheit auf, deren Erfassungsbereich auf die Bedienfläche gerichtet ist, wobei die Steuereinheit dazu ausgeführt ist, die Bewegungsrichtung des Fingers aus den Daten der Kameraeinheit zu ermitteln.

Die Kameraeinheit weist insbesondere eine Stereokamera auf, um auch räumliche Informationen aus Bildern zu erhalten. Der Erfassungsbereich der Kameraeinheit ist bevorzugt so ausgerichtet, dass mittels Bilderkennung die Bewegungsrichtung des Fingers erkannt wird und gleichzeitig auch die Lage der Fingerkuppe oder Fingerspitze relativ zur Handwurzel. Dies stellt vorteilhaft eine zuverlässige Methode dar, um die Bewegungsrichtung des Fingers und insbesondere auch die Orientierung des Fingers entlang der Oberfläche der Bedienfläche zu erfassen.

Gemäß einer weiteren alternativen oder zusätzlichen Ausführungsform ist die Steuereinheit dazu ausgeführt, die Bewegungsrichtung des Fingers aus einem zeitlichen Verlauf der an der Bedienfläche berührten Bereiche zu ermitteln.

Der zeitliche Verlauf der an der Bedienfläche berührten Bereiche wird insbesondere mittels einer Zeithistorie von als berührt eingestuften Sensorzellen des Bedienfläche bestimmt. Insbesondere dann, wenn der Finger des Anwenders eine Berührung der Bedienfläche von einem Rand herkommend in Richtung des Zentrums der Bedienfläche aufbaut, ergibt sich eine Fläche der berührten Bereiche der Bedienfläche, die über die Zeit gesehen zunehmend größer wird und vom Rand her sich aufbauend nach innen ausbreitet. Vorteilhaft ist nach dieser Ausführungsform keine Kameraeinheit notwendig, um die Bewegungsrichtung des Fingers auf der Oberfläche der Bedienfläche zu erkennen.

Gemäß einer weiteren vorteilhaften Ausführungsform ist die Steuereinheit dazu ausgeführt, den Aktivierungsort nur dann auf die Position oder den Bereich der die Fingerkuppe begrenzenden Randlinie zu beziehen, wenn durch die Steuereinheit eine Berührung des Fingers vom Rand der Bedienfläche her erkannt wird.

Diese Ausführungsform wiederum berücksichtigt vorteilhaft den Fall, dass bei einem tangentialen Aufbau der Berührung des Fingers entlang der Oberfläche der Bedienfläche vom Rand ausgehend in Richtung eines Zentrums der Bedienfläche der Anwender mit seiner Fingerkuppe das vorgegebene Feld zur Auslösung einer Funktion ansteuert. Um eine möglichst schnelle Systemreaktion darzustellen, wird die Funktion mit Erreichen des vorgegebenen Felds mit der Randlinie oder des Randlinienbereichs der Fingerkuppe bevorzugt nach einer Verweilzeit in dem Feld ausgelöst. Setzt hingegen ein Nutzer seinen Finger in einem randfernen Bereich der Bedienfläche auf, will er eine Funktion direkt oder gegebenenfalls mit einer von dort ausgehenden Wischbewegung mit seinem Fingermittelpunkt aktivieren, so dass in diesem Fall der Aktivierungsort beispielsweise bevorzugt durch Bestimmung eines Flächenschwerpunktes der durch die gesamte Fingerauflagefläche bewirkte Sensorsignale bestimmt wird.

Gemäß einer weiteren vorteilhaften zusätzlichen oder alternativen Ausführungsform ist die Steuereinheit dazu ausgeführt, den Aktivierungsort bevorzugt nur dann auf die Position oder den Bereich der die Fingerkuppe begrenzenden Randlinie zu beziehen, wenn die Fläche der berührten Bereiche in ihrem zeitlichen Verlauf von einem Rand der Bedienfläche in Richtung des Zentrums der Bedienfläche zunimmt. Die Zunahme der Fläche der berührten Bereiche stellt einen häufigen Bedienungsfall dar, bei dem eine Bestimmung des Aktivierungsortes nach einem konventionellen Verfahren, wie beispielsweise durch Bestimmung des Flächenschwerpunktes der Berührfläche, unabsichtliche Fehlauslösungen nach sich zieht. Schiebt der Nutzer beispielsweise vom Rand des Bedienfeldes seinen Daumen auf einer beispielsweise an einem Lenkrad angeordneten Bedienfläche in Richtung eines auszuwählenden Feldes, beispielsweise in der Bedienfeldmitte, so wird die Fingerauflagefläche bis zum Erreichen des Symbols kontinuierlich größer. Die Position des Flächenschwerpunkts unterscheidet sich damit signifikant von der Position der Fingerkuppe beziehungsweise von der oder dem Bereich der Randlinie. Da der Kundenwunsch die Anwahl des durch eine Symbol angezeigten Feldes ist, wird eine Aktivierung mit Erreichen der Randlinie im Symbol- d.h. Feldbereich ausgelöst. In vorteilhafter Weise wird die dem Feld zugeordnete Funktion dem Nutzerwunsch entsprechend frühestmöglich ausgelöst. Gleichzeitig ist eine unbeabsichtigte Anwahl eines Feldes durch Aktivierung eines im Zentrum der Fingerauflagefläche liegenden Aktivierungsorts, beispielsweise entsprechend dem Flächenschwerpunkt, vermieden.

Gemäß einer weiteren vorteilhaften Ausführungsform ist die Steuereinheit dazu ausgeführt, eine jeweilige Position auf der Bedienfläche nur dann als berührt einzustufen, wenn eine vorgegebene Schwelle einer Höhe eines Signalwerts an der jeweiligen Position der Bedienfläche überschritten wird. Zur Definition des Signalwertes und Erklärungen dazu, insbesondere bezüglich kapazitiver Sensorzellen, siehe oben. Bevorzugt ist die Bedienfläche als berührungssensitiver Bildschirm ausgeführt. Auf dem Bildschirm werden die zu bedienenden Felder mittels auch als Icons bezeichneten Symbolen dargestellt.

Ein weiterer Aspekt der Erfindung betrifft ein Lenkrad mit einer solchen Bedieneinheit und mit einer in einem Lenkradkranz angeordneten Kontaktsensoreinheit, wobei die Kontaktsensoreinheit dazu ausgeführt ist, die Bewegungsrichtung des Fingers auf der Oberfläche der Bedeinfläche auf Basis einer Berührungsposition einer Hand am Lenkrad in Bezug auf die Bedieneinheit zu bestimmen, und an die Steuereinheit die bestimmte Bewegungsrichtung zu übermitteln.

Die Kontaktsensoreinheit ist insbesondere dazu ausgeführt, zu detektieren, ob ein Fahrer des Fahrzeugs, der dem oben genannten Anwender entspricht, eine oder beide Hände am Lenkrad hält. Während eine solche Kontaktsensoreinheit insbesondere als Fahrerassistenzsystem zur Erhöhung der Sicherheit verwendet wird, wird gemäß dieses weiteren Aspekts der Erfindung die Information aus der Kontaktsensoreinheit dazu verwendet, eine Position der Hand am Lenkrad zu ermitteln und daher mit diesem Vorwissen auf die Bewegungsrichtung des Fingers beim Aufbau der Berührung zu schließen, und diese Information an die Steuereinheit zu übermitteln. Bevorzugt ist die Bedienfläche der Bedieneinheit am Lenkrad angeordnet, bevorzugt an einer Speiche des Lenkrads, besonders bevorzugt an einem radial außen liegenden Ende der Speiche des Lenkrads im Bereich eines Übergangs der Speiche des Lenkrads zum Lenkradkranz.

Vorteile und bevorzugte Weiterbildungen des vorgeschlagenen Lenkrads ergeben sich durch eine analoge und sinngemäße Übertragung der im Zusammenhang mit der vorgeschlagenen Bedieneinheit vorstehend gemachten Ausführungen.

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Gleiche, ähnliche und/oder funktionsgleiche Teile sind mit gleichen Bezugszeichen versehen.

Es zeigen:
- Fig. 1: eine Bedieneinheit gemäß einem Ausführungsbeispiel der Erfindung,
- Fig. 2: ein Lenkrad mit einer Bedieneinheit gemäß einem weiteren Ausführungsbeispiel der Erfindung,
- Fig. 3: Bedienfeld mit Bedienfinger und
- Fig. 4: Bedienfeld als Schieberegler mit Bedienfinger.

Die Darstellungen in den Figuren sind schematisch und nicht maßstäblich.

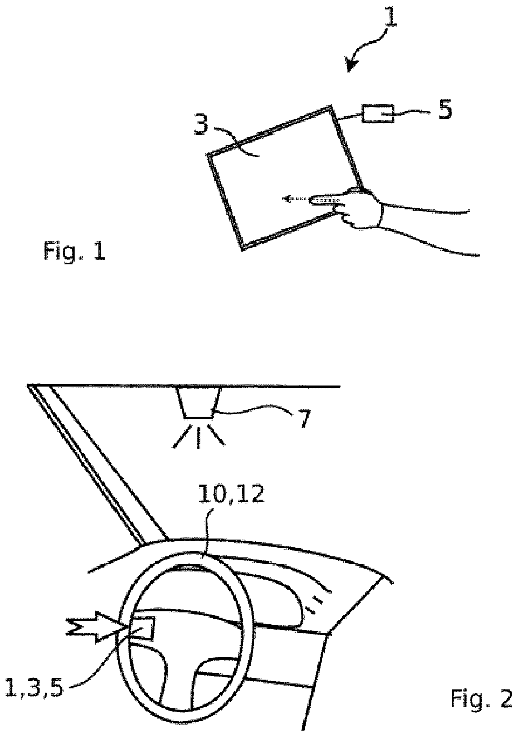

Fig. 1 zeigt eine Bedieneinheit 1 mit einem als berührungssensitiver Bildschirm 3 ausgeführten Bedienfeld und mit einer Steuereinheit 5. Die Steuereinheit 5 ist mit dem Bildschirm 3 verbunden und empfängt von diesem Daten. Der Bildschirm 3 dient zum Erfassen von Bereichen der Oberfläche des Bildschirms 3, die ein Anwender mit seinem Finger berührt. Der Bildschirm 3 übermittelt außerdem Informationen über die Erfassung der berührten Bereiche an die Steuereinheit 5. Die Steuereinheit 5 ermittelt dann aus den Informationen über die berührten Bereiche einen Aktivierungsort auf dem Bildschirm 3. Ist dem Aktivierungsort auf dem Bildschirm 3 keine Funktion zugeordnet, erfolgt keine Ausführung einer Funktion. Liegt dagegen der Aktivierungsort in einem vorgegebenen Feld oder Bereich eines jeweiligen auf dem Bildschirm 3 dargestellten Symbols, wird eine dem Symbol zugeordnete Funktion durch die Steuereinheit 5 ausgeführt. Die Steuereinheit 5 bestimmt den Aktivierungsort im Bereich einer Randlinie, die die berührende Fingerkuppe begrenzt. Diese Randlinie liegt in Bewegungsrichtung des Fingers auf der Oberfläche des Bildschirms 3 vorne. Hierbei wird von der Steuereinheit 5 ein Flächenschwerpunkt der Signalwerte im Randbereich der Fingerkuppe ermittelt und bei Abschluss des Berührungsaufbaus der Ort dieses Flächenschwerpunkts auf der Oberfläche des Bildschirms 3 als Aktivierungsort bestimmt. Der Randbereich kann nur die Randlinie selbst oder ein von der Randlinie ausgehender Bereich vordefinierter Breite umfassen. Die Bewegungsrichtung des Fingers wird von der Steuereinheit 5 aus einem zeitlichen Verlauf der am Bildschirm 3 berührten Bereiche ermittelt. Die Bewegungsrichtung ist in der Fig. 1 mit einem Pfeil symbolisiert. Die Steuereinheit 5 bezieht den Aktivierungsort jedoch nur dann auf den Flächenschwerpunkt der Randlinie oder den Bereich der Randlinie, wenn durch die Steuereinheit 5 eine Berührung des Fingers vom Rand des Bildschirms 3 her erkannt wird. Dies ist dann der Fall, wenn die Fläche der berührten Bereiche in ihrem zeitlichen Verlauf von einem Rand des Bildschirms 3 in Richtung des Inneren des Bildschirms 3 zunimmt. In der Fig. 1 ist dies der Fall - der Finger des Anwenders streift von außen des Bildschirms über den unteren Rand nach links oben auf ein nicht dargestelltes Icon zu.

Fig. 2 zeigt ein Lenkrad 10 mit einer Bedieneinheit 1. Hierbei sind im Gegensatz zum Beispiel der Fig. 1 der Bildschirm 3 und die Steuereinheit 5 in einer gemeinsamen Einheit angeordnet. Der Bildschirm 3 ist so angeordnet, dass der Daumen der linken Hand des Fahrers über den linken Bildschirmrand (bei Geradestellung des Lenkrads) entlang der Oberfläche des Bildschirms 3 in Richtung der Drehachse des Lenkrads hinein streift. Im Lenkradkranz ist eine Kontaktsensoreinheit 12 angeordnet, wobei die Kontaktsensoreinheit 12 dazu ausgeführt ist, die Bewegungsrichtung des Fingers auf der Oberfläche des Bildschirms 3 auf Basis einer Berührungsposition der Hand am Lenkrad 10 in Bezug auf die Bedieneinheit 1 zu bestimmen, und an die Steuereinheit 5 die bestimmte Bewegungsrichtung zu übermitteln. Das heißt, dass bei einer Erkennung der linken Hand des Fahrers auf dem Lenkradkranz im Bereich des Bildschirms 3 davon ausgegangen wird, dass auch sein Finger über diesen Rand vom Lenkradkranz herkommend auf der Oberfläche des Bildschirms 3 sich bewegt. Eine Kameraeinheit 7, deren Erfassungsbereich auf den Bildschirm 3 gerichtet ist, erfasst zusätzlich die Bewegungsrichtung. Nur wenn aus beiden Quellen, das heißt nach den Daten der Kontaktsensoreinheit 12 und der Kameraeinheit 7, von der Steuereinheit 5 eine Berührung vom Rand des Bildschirms 3 her erkannt wird, bezieht die Steuereinheit 5 den Aktivierungsort auf den Flächenschwerpunkt der auf oder im Bereich einer eine Fingerkuppe begrenzenden Randlinie.

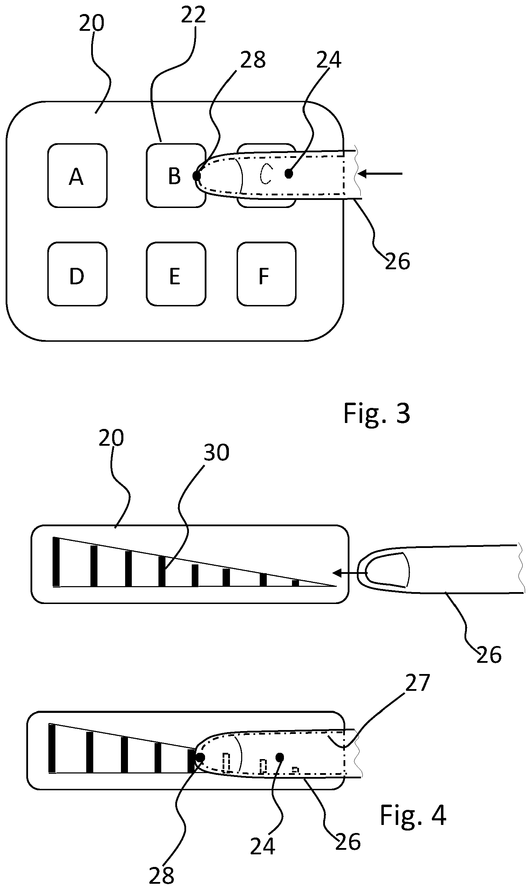

Anhand der Fig. 3 und 4 wird nachfolgend die Arbeitsweise der erfindungsgemäßen Bedieneinheit gegenüber einer Ausführung nach dem Stand der Technik ausgeführt.

In Fig. 3 ist ein Bedienfeld 20 mit als Icon 22 ausgeführten Symbolen A bis F gezeigt. Die Icons 22 stellen ein vorgegebenes Feld dar, denen eine Funktion zugeordnet ist, wenn der Aktivierungsort durch Berührung mit dem Finger 26 in einem der Felder der Icons 22 A-F liegt. Der besseren Übersichtlichkeit wegen ist nur ein Icon A bis F mit dem Bezugszeichen 22 versehen. Der Bedienfinger 26 wischt von rechts nach links ausgehend vom Rand des Bedienfelds 20 Richtung des Icon B. Mit der Bewegung vom Rand baut sich durch die flächige Schiebebewegung des Fingers das gestrichelt gezeichnete Sensorsignalfeld 27 auf, d.h. in diesem Bereich werden beispielsweise auf einer kapazitiven Berührfläche oder einem kapazitiven Display Sensorsignale erzeugt. Aufgrund der Bewegungsrichtung vom Rand erkennt die Bedieneinheit, dass der Nutzer mit seinem Finger auf ein zu aktivierendes Icon zusteuert und im vorliegenden Fall die dem mit B bezeichneten Icon 22 zugeordnete Funktion aktivieren will. Aufgrund dieses Nutzerwunsches wird der durch die Fingerberührung bewirkte Aktivierungsort 28 in Bewegungsrichtung des Fingers auf oder im Bereich der vorne liegenden Randlinie bestimmt. Sobald der Aktivierungsort 28 im mit B bezeichneten Feld des Icons 22 liegt wird die dem Icon 22 zugeordnete Funktion ausgeführt. Dadurch erhält der Nutzer eine schnelle Systemreaktion.

Im Gegensatz dazu würde eine Bestimmung des Aktivierungsortes durch eine aus dem Stand der Technik bekannte Bestimmung, beispielweise die Bestimmung des Schwerpunktes des Sensorsignalfeldes 27, zu einem Aktivierungsort 24 führen, der entgegen dem Nutzerwusch die Auslösung der dem mit C bezeichneten Icon 22 zugeordneten Funktion bewirken würde. Bevorzugt wird dabei der Aktivierungsort durch die vorne liegende Randlinie nur ausgewählt, sofern eine ermittelte Bewegungsgeschwindigkeit über die Bedienfläche des Sensorfeldes über einem vorgebbaren Grenzwert liegt. Legt hingegen ein Nutzer beispielsweise ein Finger auf das Sensorfeld auf und bewegt den Finger langsam um die Position oder gegebenenfalls zur nächsten Position, ist entsprechend einem Nutzerwunsch eine Bestimmung des Aktivierungsorts aus einem Flächenschwerpunkt der vom Finger berührten Bereich vorzuziehen.

In Fig. 4 ist als weiterer Anwendungsfall eine Bedieneinheit mit einem berührungsempfindlichen Bedienfeld 20 dargestellt, bei dem durch Anwählen von durch Säulen 30 dargestellten Stufen beispielsweise eine Lautstärke eines Audiosystems einstellbar ist, d.h. sobald der Aktivierungsort des Fingers im Bereich einer Säule 30 liegt, wird die zugehörige Lautstärke eingestellt. Im oberen Bild der Fig. 4 nähert sich ein Bedienfinger von rechts dem Bedienfeld 20. Die untere Darstellung zeigt einen Zustand, bei dem sich der Finger ausgehend vom rechten Rand bis zur vierten Säule 30 in das Bedienfeld 20 geschoben hat und vollflächig aufliegt, so dass das gestrichelte Sensorsignalfeld 27 erzeugt wird. Da aufgrund der Betätigungsart offensichtlich ist, dass der Nutzer die dieser vierten Säule zugeordnete Lautstärke einstellen will, wird der durch die Fingerberührung bewirkte Aktivierungsort 28 in Bewegungsrichtung des Fingers auf oder im Bereich der vorne liegenden Randlinie bestimmt. Der Verfahrweg des Fingers auf dem Bedienfeld entspricht damit einer Änderung des Aktivierungsortes 28. Der Nutzer erhält damit eine klare Zuordnung seine Fingerposition zu seinem Benutzerwunsch, wodurch eine leichte Betätigung gewährleistet ist. Im Gegensatz dazu wäre entsprechend dem vorangegangenen Ausführungsbeispiel der aus dem Flächenschwerpunkt der Sensorflache 27 bestimmte Aktivierungsort 24 bei einer über einem Grenzwert liegenden Bewegungsgeschwindigkeit nicht geeignet, da der Nutzer nicht nachvollziehen kann wie weit er seinen Finger auf das Bedienfeld schieben muss, um die gewünschte Lautstärke zu aktivieren. Insbesondere für den Fall, dass sich der Finger bereits mit entsprechendem Geschwindigkeitsvorschub in das Bedienfeld 20 einschiebt, wird durch die Bestimmung des Aktivierungsortes durch die vorne liegende Randlinie dem Nutzer eine spontane, nachvollziehbare Reaktion vermittelt. Bei langsamen oder quasistatischen Bewegungen unterhalb der Grenzgeschwindigkeit ist ausgehend von einer vorzugsweise statischen Fingerauflageposition auf dem Bedienfeld 20, bei der der Aktivierungsort über den Flächenschwerpunkt ermittelt wird, bei einer auf die Fingerauflageposition nachfolgenden Bewegung der Aktivierungsort weiterhin über den Flächenschwerpunkt zu bestimmen, so dass für einen Nutzer die ermittelten Aktivierungsorte in Bezug zu seinen Fingerbewegungen nachvollziehbar bleiben.

Die erfindungsgemäße Bedieneinheit ermöglich eine deutliche Verbesserung der Bedienung von beispielsweise an Lenkrädern, Türschaltfeldern oder am Armaturenbrett angeordneten Bedienflächen, die insbesondere die aufgrund ihrer räumlichen Anordnung zum Nutzer eine Bedienung mit vollflächig aufgelegten Fingern begünstigen. Die Bedienflächen sind beispielsweise kapazitive Bedienflächen mit berührungssensitiven Sensoren mit statischen Feldern, die beispielsweise mechanische Schalter ersetzen. In weiterer Ausführungsform ist die Bedienfläche ein Touchpad, mit dem durch Berührung ein zugeordneter Bildschirm bedienbar ist, oder ein Touchdisplay.

## Patentansprüche

1. Bedieneinheit (1) mit einer berührungssensitiven Bedienfläche (3) und mit einer Steuereinheit (5), wobei die Bedienfläche (3) zum Erfassen von durch einen Finger eines Anwenders berührten Bereichen der Bedienfläche (3) und zum Übermitteln von Informationen über die berührten Bereiche an die Steuereinheit (5) ausgeführt ist, wobei die Steuereinheit (5) dazu ausgeführt ist, aus den Informationen über die berührten Bereiche einen Aktivierungsort auf der Bedienfläche(3) zu ermitteln, und, wenn der Aktivierungsort in einem vorgegebenen Feld der Bedienfläche (3) liegt, eine dem Feld zugeordnete Funktion auszuführen,
**dadurch gekennzeichnet, dass** die Steuereinheit (5) dazu ausgeführt ist, den Aktivierungsort auf oder im Bereich einer eine Fingerkuppe begrenzenden, in Bewegungsrichtung des Fingers auf der Oberfläche der Bedienfläche (3) vorne liegenden Randlinie nur dann zu bestimmen, wenn eine ermittelte Bewegungsgeschwindigkeit eines Verlaufs der berührten Bereiche der Bedienfläche (3) einen vorgegebenen Grenzwert überschreitet, und andernfalls den Aktivierungsort aus einem Flächenschwerpunkt aller zu einem Zeitpunkt vom Finger berührten Bereiche der Bedienfläche (3) zu ermitteln.

2. Bedieneinheit (1) nach Anspruch 1,
wobei die Steuereinheit (5) dazu ausgeführt ist, den Aktivierungsort aus der Position eines höchsten Signalwertes oder aus einem Flächenschwerpunkt der auf der Randlinie oder im Bereich der Randlinie der von der Bedienläche (3) erfassten Signalwerte an den berührten Bereichen zu bestimmen.

3. Bedieneinheit (1) nach einem der Ansprüche 1 bis 2,
aufweisend eine Kameraeinheit (7), deren Erfassungsbereich auf die Bedienfläche (3) gerichtet ist, wobei die Steuereinheit (5) dazu ausgeführt ist, die Bewegungsrichtung des Fingers aus den Daten der Kameraeinheit (7) zu ermitteln.

4. Bedieneinheit (1) nach einem der Ansprüche 1 bis 2,
wobei die Steuereinheit (5) dazu ausgeführt ist, die Bewegungsrichtung des Fingers aus einem zeitlichen Verlauf der auf der Bedienfläche (3) berührten Bereiche zu ermitteln.

5. Bedieneinheit (1) nach einem der vorhergehenden Ansprüche,
wobei die Steuereinheit (5) dazu ausgeführt ist, den Aktivierungsort auf die Position oder den Bereich der die Fingerkuppe begrenzenden Randlinie zu beziehen, wenn durch die Steuereinheit (5) eine Berührung des Fingers vom Rand der Bedienfläche (3) her erkannt wird.

6. Bedieneinheit (1) nach Anspruch 5,
wobei die Steuereinheit (5) dazu ausgeführt ist, den Aktivierungsort auf die Position oder den Bereich der die Fingerkuppe begrenzenden Randlinie zu beziehen, wenn die Fläche der berührten Bereiche in ihrem zeitlichen Verlauf von einem Rand der Bedienfläche (3) in Richtung des Inneren der Bedienfläche (3) zunimmt.

7. Bedieneinheit (1) nach einem der vorhergehenden Ansprüche,
wobei die Steuereinheit (5) dazu ausgeführt ist, eine jeweilige Position auf der Bedienfläche (3) nur dann als berührt einzustufen, wenn eine vorgegebene Schwelle einer Höhe eines Signalwerts an der jeweiligen Position der Bedienfläche (3) überschritten wird.

8. Bedieneinheit (1) nach einem der vorhergehenden Ansprüche,
wobei die Bedienfläche (3) als berührungssensitiver Bildschirm ausgeführt ist.

9. Lenkrad (10) mit einer Bedieneinheit (1) nach einem der vorhergehenden Ansprüche und mit einer in einem Lenkradkranz des Lenkrads (10) angeordneten Kontaktsensoreinheit (12), wobei die Kontaktsensoreinheit (12) dazu ausgeführt ist, die Bewegungsrichtung des Fingers auf der Oberfläche der Bedienfläche (3) auf Basis einer Berührungsposition einer Hand am Lenkrad (10) in Bezug auf die Bedieneinheit (1) zu bestimmen, und an die Steuereinheit (5) die bestimmte Bewegungsrichtung zu übermitteln.

## Claims

1. Operating unit (1) with a touch-sensitive operating area (3) and with a control unit (5), wherein the operating area (3) is designed for capturing regions of the operating area (3) which are touched by a finger of a user and for transmitting information about the touched regions to the control unit (5), wherein the control unit (5) is designed to determine from the information about the touched regions an activation point on the operating area (3) and, if the activation point lies in a predetermined field of the operating area (3), to execute a function assigned to the field,
**characterised in that** the control unit (5) is designed to determine the activation point at or in the region of an edge line bounding a fingertip and lying in front in the movement direction of the finger on the surface of the operating area (3) only if a detected speed of movement of a course of the touched regions of the operating area (3) exceeds a predetermined limit value, and otherwise to determine the activation point from a centroid of all regions touched by the finger at a point in time.

2. Operating unit (1) according to claim 1,
wherein control unit (5) is designed to determine the activation point from the position of a highest signal value of from a centroid of the signal values detected on the edge line or in the region of the edge line at the touched regions.

3. Operating unit (1) according to any of claims 1 to 2,
having a camera unit (7), the coverage area of which is directed onto the operating area (3), wherein the control unit (5) is designed to determine the movement direction of the finger from data of the camera unit (7).

4. Operating unit (1) according to any of claims 1 to 2,
wherein the control unit (5) is designed to determine the movement direction of the finger from a chronological sequence of the regions touched on the operating area (3).

5. Operating unit (1) according to any of the preceding claims,
wherein the control unit (5) is designed to relate the activation point to the position or the region of the edge line bounding the fingertip if a touch of the finger from the edge of the operating area (3) is detected by the control unit (5).

6. Operating unit (1) according to claim 5, wherein the control unit (5) is designed to relate the activation point to the position or the region of the edge line bounding the fingertip if the area of the touched regions increases from an edge of the operating area (3) towards the interior of the operating area (3) in its chronological sequence.

7. Operating unit (1) according to any of the preceding claims,
wherein the control unit (5) is designed to rate a respective position on the operating area (3) as touched only if a predetermined threshold of a level of a signal value is exceeded at the respective position on the operating area (3).

8. Operating unit (1) according to any of the preceding claims,
wherein the operating area (3) is designed as a touch-sensitive screen.

9. Steering wheel (10) having an operating unit (1) according to any of the preceding claims and a contact sensor unit (12) located in a steering wheel rim of the steering wheel (10), wherein the contact sensor unit (12) is designed to determine the movement direction of the finger on the surface of the operating area (3) on the basis of a touching position of a hand at the steering wheel (10) in relation to the operating unit (1) and to transmit the determined movement direction to the control unit (5).

## Revendications

1. Unité de commande (1) comprenant une surface de commande (3) tactile et comprenant une unité de contrôle (5), dans laquelle la surface de commande (3) est conçue pour détecter des zones de la surface de commande (3) touchées par un doigt d'un utilisateur et pour transmettre des informations par l'intermédiaire des zones touchées à l'unité de commande (5),
dans laquelle l'unité de contrôle (5) est conçue pour déterminer à partir des informations par l'intermédiaire des zones touchées un emplacement d'activation sur la surface de commande (3), et, lorsque l'emplacement d'activation se trouve dans un champ prédéfini de la surface de commande (3), pour exécuter une fonction associée au champ,
**caractérisée en ce que** l'unité de contrôle (5) est conçue pour déterminer uniquement l'emplacement d'activation sur ou dans la zone d'une ligne de bord se trouvant devant limitant un bout de doigt, dans la direction de mouvement du doigt sur la surface de la face de commande (3) lorsque une vitesse de déplacement déterminée d'une trajectoire ? de la zone touchée de la surface de commande (3) dépasse une valeur limite prédéfinie, et sinon déterminer l'emplacement d'activation à partir d'un centre de surface de toutes les zones de la surface de commande (3) touchées par le doigt à un moment.

2. Unité de commande (1) selon la revendication 1,
dans laquelle l'unité de contrôle (5) est conçue pour déterminer l'emplacement d'activation à partir de la position d'une ampleur de signal la plus élevée ou à partir d'un point central de surface des valeurs de signal détectées par la surface de commande (3)dans les zones touchées sur la ligne de bord ou dans la zone de la ligne de bord.

3. Unité de commande (1) selon l'une quelconque des revendications 1 à 2, comprenant une unité de caméra (7) dont la zone de détection est dirigée vers la surface de commande (3), dans laquelle l'unité de contrôle (5) est conçue pour déterminer la direction de mouvement du doigt à partir des données de l'unité de caméra (7).

4. Unité de commande (1) selon l'une quelconque des revendications 1 à 2, dans laquelle l'unité de contrôle (5) est conçue pour déterminer la direction de mouvement du doigt à partir d'une allure temporelle des zones touchées sur la surface de commande (3).

5. Unité de commande (1) selon l'une quelconque des revendications
précédentes, dans laquelle l'unité de contrôle (5) est conçue pour mettre en rapport l'emplacement d'activation sur la position ou dans la zone de la ligne de bord limitant le bout du doigt, lorsque l'unité de contrôle (5) reconnaît un contact du doigt depuis le bord de la surface de commande (3).

6. Unité de commande (1) selon la revendication 5, dans laquelle l'unité de
contrôle (5) est conçue pour rapporter l'emplacement d'activation à la position ou à la région de la ligne de bord limitant le bout du doigt, lorsque la surface des zones touchées augmente dans son allure temporelle d'un bord de la surface de commande (3) en direction de l'intérieur de la surface de commande (3).

7. Unité de commande (1) selon l'une quelconque des revendications
précédentes, dans laquelle l'unité de contrôle (5) est conçue pour classer une position respective sur la surface de commande (3) comme étant touchée lorsqu'un seuil prédéfini d'une amplitude d'une valeur de signal est dépassé sur la position respective de la surface de commande (3).

8. Unité de commande (1) selon l'une quelconque des revendications
précédentes, dans laquelle la surface de commande (3) est conçue sous la forme d'écran tactile.

9. Volant de direction (10) comprenant une unité de commande (1) selon l'une quelconque des revendications précédentes et comprenant une unité de capteur de contact (12) disposée sur un bord extérieur de volant du volant (10), dans lequel l'unité de capteur de contact (12) est conçu pour déterminer la direction du mouvement du doigt sur la surface de la surface de commande (3) sur la base d'une position de contact d'une main sur le volant (10) par rapport à l'unité de commande (1), et pour transmettre à l'unité de contrôle (5) la direction de mouvement déterminée.
